# EUROPEAN PATENT SPECIFICATION

(11) **EP 4 316 702 B1**
(45) Date of publication and mention of the grant of the patent: **12.03.2025**
(21) Application number: 23209404.5
(22) Date of filing: 22.01.2021
(51) Int. Cl.: B23Q 39/04, B23B 3/32

(54) **NUMERICALLY CONTROLLED MULTI-SPINDLE LATHE**
NUMERISCH GESTEUERTE MEHRSPINDELDREHMASCHINE
TOUR MULTIBROCHE À COMMANDE NUMÉRIQUE

(30) Priority: 30.01.2020 IT 202000001789
(43) Date of publication of application: 07.02.2024
(62) Divisional of application: 21153064.7
(73) Proprietor: PAOLINO BACCI S.R.L., 56021 Cascina (PI) (IT)
(72) Inventor: BACCI, Giuseppe, 56025 Pontedera (Pi) (IT); BACCI, Nino, 56025 Pontedera (Pi) (IT); BACCI, Paolo, 56025 Pontedera (Pi) (IT)
(74) Representative: Mannucci, Michele

(56) References cited:
- EP-A1- 2 161 098
- US-A- 4 559 681
- US-B1- 6 203 478
- US-B2- 9 333 560

## Description

### TECHNICAL FIELD

The present invention relates to the field of machine tools. More in particular, the invention relates to the field of numerically controlled lathes.

### BACKGROUND TO THE INVENTION

For manufacturing elongated workpieces, for example furniture components, made of wood, plastic, light alloys or the like, the use of numerically controlled lathes and copying lathes is well known. In particular, for manufacturing furniture components such as chair and table legs, multi-spindle copying lathes are known, which allow working contemporaneously a plurality of workpieces supported by a plurality of centers and tailstocks. The tools machining in parallel the plurality of workpieces are controlled through a template reproducing the shape of the product to be manufactured. US6203478 and US9333560 disclose machines for drilling oil holes in a crankshaft, that form the basis of the preamble of appended claim 1. EP2161098 discloses a milling machine for simultaneous milling of a plurality of workpieces.

These machines are reliable and accurate but have some drawbacks, due to the fact that they are copying machines, i.e. machines requiring the use of templates reproducing the shape of the finished product.

It would be useful to have available a multi-spindle lathe adapted to produce, flexibly, at high productivity rates and with high accuracy, products that are currently manufactured through copying lathes.

### SUMMARY

To completely or at least partially overcome the drawbacks of the prior art multi-spindle lathes, a numerically controlled multi-spindle lathe is provided with a new configuration, as set forth in claim 1. The lathe comprises a bearing structure with a base extending according to a first translation axis. The lathe further comprises a plurality of pairs of turning members for rotating the workpieces. Each pair comprises a center and a tailstock that are coaxial with each other and define a respective rotation axis for the workpieces. Each center is motorized and the distance between centers and tailstocks is adjustable. Motorization can be provided by a single motor with transmission members, or by a plurality of motors, each of which can rotate one or more centers. In particular, the motor, or each motor, for rotating the centers may be a numerically controlled motor, so as to impart a numerically controlled rotation to each workpiece. The configuration is preferably such as identically to machine identical workpieces supported by the pairs of centers and tailstocks. To this end, the pairs of centers and tailstocks rotate synchronously.

Suitably, the lathe further comprises a first carriage guided on first guides that are integral with the base and extend in the direction of the first translation axis. The first carriage is advantageously provided with a numerically controlled movement along the first guides according to the first translation axis. Advantageously, the lathe further comprises a second carriage, supported by the first carriage and movable with a numerically controlled movement with respect to the first carriage. To this end, second guides are provided, extending in the direction of a second translation axis, orthogonal to the first translation axis. As it will be better explained below, the second carriage may be directly supported by the first carriage, but it is also possible to provide a further intermediate carriage between the first carriage and the second carriage, so as to have a further translation axis. The choice between one configuration and the other can be based, for example, on the number of movements that the tools shall perform with respect to the workpieces.

The lathe also comprises a plurality of spindles with parallel axes, supported by the second carriage and adapted to rotate tools configured to work simultaneously workpieces mounted between the centers and the tailstocks. The number of spindles is typically equal to the number of pairs of centers and tailstocks. The spindles may be suitably rotate synchronously.

In other embodiments, the number of pairs of centers and tailstocks can be twice the number of spindles, so that each tool supported by a spindle can machine two parallel workpieces simultaneously, by arranging the tool rotation axis in intermediate position between the rotation axes of the two workpieces to be machined simultaneously. In this case, machining can be performed by using spindles rotating around axes parallel to the rotation axes of the workpieces. The tools may have such a dimension (typically a diameter) so as to simultaneously machine two adjacent workpieces. In embodiments, the spindles may be provided with two translation movements according to two axes that are orthogonal to each other and to the rotation axis of the pairs of turning members for rotating the workpieces (centers and tailstocks). The first movement, orthogonal to the plane of lying of the rotation axes of the turning members for rotating the workpieces, is a numerically controlled movement towards the workpieces. The second movement, parallel to the plane of lying of the rotation axes of the turning members for rotating the workpieces, may be a numerically controlled movement, or simply an adjustment movement for aligning each of the rotation axes of the spindles with one of the rotation axes of the turning members for rotating the workpieces, or for bringing them to an intermediate position between two rotation axes of two adjacent workpieces, for simultaneously machining these two workpieces.

The lathe structure is such as to have highly stiff guiding systems, thus allowing the carriages, in particular the second carriage, to move with high accelerations. This allows shortening the working cycles and increasing the lathe productivity. In particular, the base fixed on the ground, to which the first guides for the first carriage are fastened, allows stiffening the structure and allows high accelerations of the second carriage along the second translation axis.

The movement along the first translation axis is typically parallel to the rotation axis of the centers and tailstocks, i.e. to the rotation axis of the workpieces. This movement is therefore parallel to the longitudinal extension of the workpieces. The movement along the second translation axis is a movement towards, and away from, the rotation axis of centers and tailstocks, i.e. orthogonal to this axis.

In some embodiments, the second guides are integral with the second carriage and preferably comprise a pair of guides that are spaced from each other in a direction orthogonal to the first translation axis and to the second translation axis.

The first translation axis and the second translation axis are horizontal, and the centers and the tailstocks define a plurality of rotation axes for the workpieces lying on a vertical plane, parallel to the first translation axis and orthogonal to the second translation axis.

The term "vertical" as used herein indicates a direction parallel to the gravity direction, and the term "horizontal" indicates a direction orthogonal to the gravity direction. In the description below and the attached claims, the terms "vertical" and "horizontal" refer to the multi-spindle lathe in work position.

In advantageous embodiments, the lathe base comprises an upper wall and two side walls, extending in the direction of the first translation axis. The first guides are applied on a first side wall of the base, and the first carriage forms a movable upright adj acent to the first side wall of the base and extending vertically beyond the upper surface of the base.

To achieve high stiffness, in some embodiments the first guides comprise a pair of guides, whose center-to-center distance is equal to at least 50% of the height of the base, and preferably to at least 70% of the height of the base. The center-to-center distance is preferably the largest possible with respect to the height of the base, taking into account any construction constraint. In this way, a significant constraint reaction is achieved, in particular a constraint reaction torque around the first translation axis, adapted to withstand high dynamic stresses generated by the accelerations of the second carriage moving along the second translation axis.

For example, the center-to-center distance between the pair of first guides is greater than 300 mm, preferably greater than 400 mm and, more preferably, is comprised between 450 mm and 550 mm. The base height, the distance between the axes of centers and tailstocks and the number of centers and tailstocks are chosen so that an operator can load the workpieces easily.

In some embodiments, to facilitate chips collection, the base comprises a conveyor for collecting the chips that are formed while machining the workpieces, which is arranged on the upper side of the base, for example in a lowered area of the upper side. The conveyor can move parallel to the first translation axis, but it is also possible to use a conveyor, whose width extends parallel to the first translation axis and which moves in the direction of the second translation axis.

In embodiments described herein, the tailstocks are supported by an upright movable parallel to the first translation axis, to adjust the distance between the centers and the tailstocks. The centers are supported by an upright that is fixed with respect to the base. In this way, a simpler configuration is provided, as the motors of the centers are supported by the fixed upright. A reverse arrangement is also possible.

The movable upright supporting the tailstocks may be advantageously guided on lower guides integral with the base and parallel to the first guides, and, if necessary, on upper guides supported by the bearing structure above the base.

In advantageous embodiments, the lathe can comprise a flexible protective wall, approximately parallel to the first translation axis and approximately orthogonal to the second translation axis. The wall separates a machining area, where the centers and the tailstocks, as well as the chips collecting conveyor, if any, are arranged, from a protected back area, where the first carriage and the respective first guides are arranged. The second carriage may extend through the flexible wall to bring the tools into working position.

In some embodiments, the lathe comprises a third carriage, interposed between the first carriage and the second carriage. The second carriage is supported by the third carriage and is movable with respect to the third carriage along the second translation axis. The third carriage is supported by the first carriage and is movable along a third translation axis with a numerically controlled translation movement. The third translation axis is preferably orthogonal to the first translation axis and to the second translation axis. If the first two translation axes are horizontal, the third translation axis is vertical.

Further features and advantageous embodiments are described below and defined in the attached claims.

### BRIEF DESCRIPTION OF THE DRAWING

The invention shall be better understood by following the description and the accompanying drawing, which shows a non-limiting example of the invention. More specifically, in the drawing:
Fig.1 is a front view according to I-I of Fig.2 of a multi-spindle lathe according to the present invention;
Fig.2 is a cross-section according to II-II of Fig. 1;
Fig.3 is a rear view according to III-III of Fig.2;
Fig.4 is a plan view according to IV-IV of Fig. 1;
Fig.5 is a front view according to V-V of Fig.6 of a multi-spindle lathe, which does not fall within the scope of the claims;
Fig.6 is a cross-section according to VI-VI of Fig.5;
Fig.7 is a rear view according to VII-VII of Fig.6; and
Fig.8 is a plan view according to VIII-VIII of Fig.5.

### DETAILED DESCRIPTION

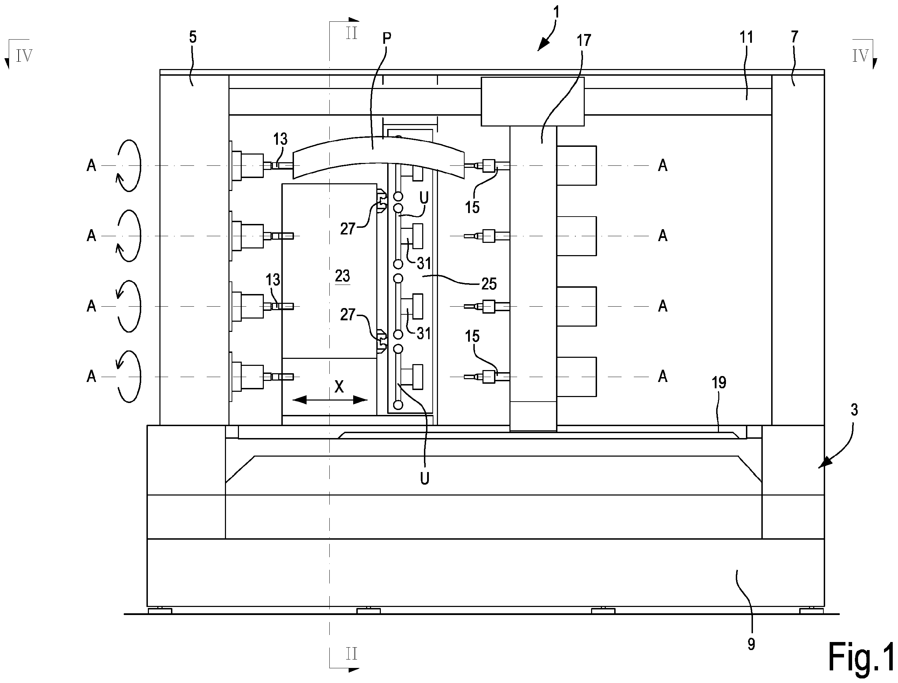

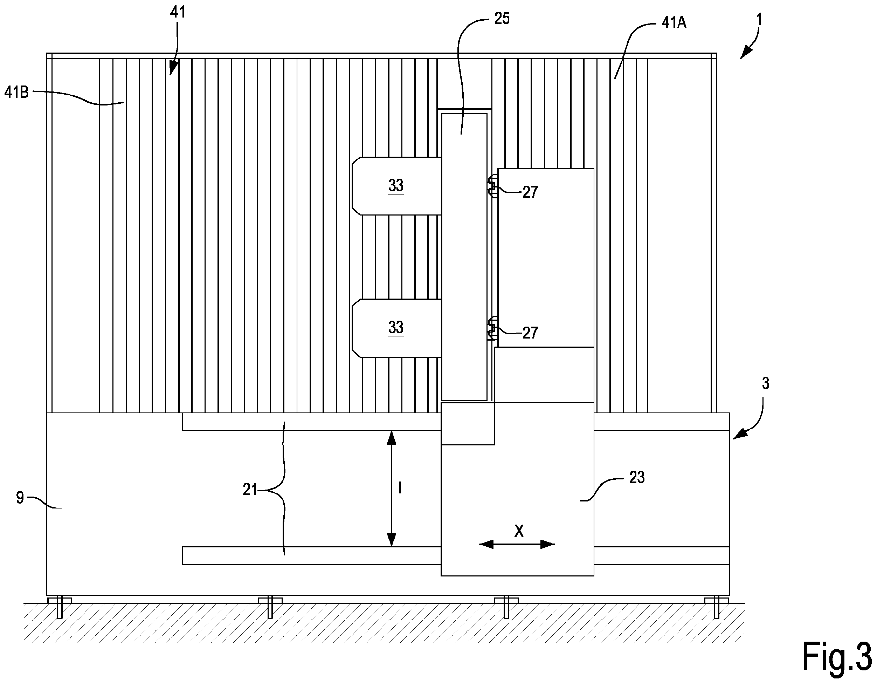

A multi-spindle lathe according to the present invention is shown in Figs. 1-4. The lathe is indicated with number 1 and comprises a bearing structure 3. The bearing structure 3 comprises a first vertical upright 5 and a second vertical upright 7, rigidly connected to a lower horizontal base 9. The uprights 5 and 7 are connected, at the top, by a horizontal crossbar 11.

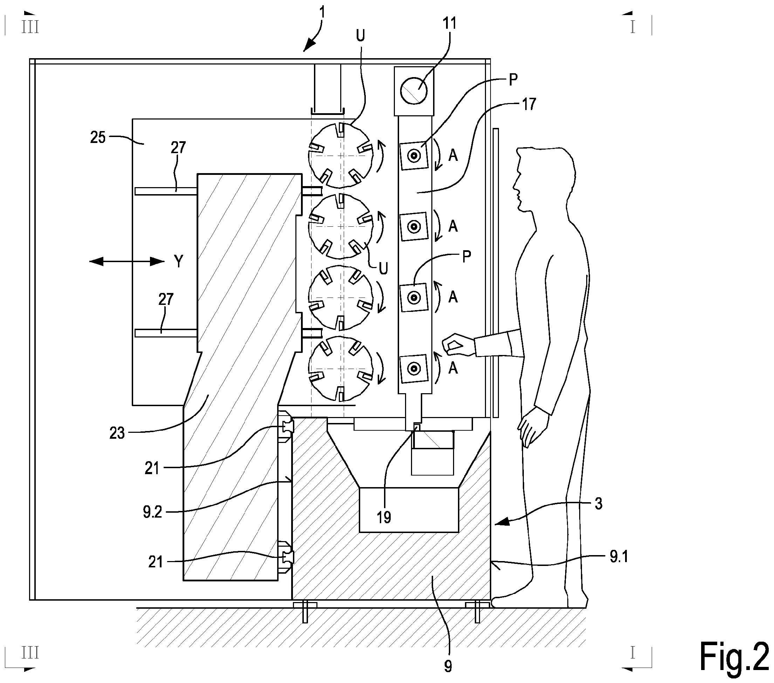

A plurality of centers 13 are supported by the upright 5. Each center is associated with a tailstock 15. Each center is coaxial with the respective tailstock. The letter A indicates the rotation axes of the pairs of centers and tailstocks, which define members supporting and rotating the workpieces P to be machined. Each center 13 is driven into rotation around the respective axis A by a numerically controlled motor, not shown. Preferably, the motors of the centers 13 are so controlled that all centers 13 rotate synchronously. In this way, a plurality of tools U (Fig.2) supported by spindles 31 (described in more detail below) can machine synchronously and simultaneously all workpieces P supported and rotated by the pairs of centers and tailstocks 13, 15. In the illustrated embodiment, the tools U, and therefore the spindles 31 supporting them, rotate around axes parallel to the rotation axes A of the centers 13 and the tailstocks 15, i.e. horizontal axes parallel to a first numerically controlled translation axis X, along which the tools U move, and orthogonal to a second numerically controlled translation axis Y, along which the tools U move, that are described in greater detail below. The configuration and arrangement of the spindles 31 and of the respective tools U, and of the centers 13 and tailstocks 15, are such that the workpieces P are machined as mentioned above (rotation axes of the tools U parallel to the rotation axes A of the centers 13 and the tailstocks 15, and therefore to the rotation axes of the workpieces P being machined). In other words, this arrangement is such that the workpieces and the tools co-act while the axes A are parallel to the rotation axes of the tools U and of the spindles 31 carrying them.

The tailstocks 15 are supported by a bearing structure allowing the movement thereof in a direction parallel to the translation axis X to adjust the distance between centers 13 and tailstocks 15. In this embodiment, the bearing structure comprises a movable upright 17 extending vertically. The movable upright 17 can be guided along adjustment upper guides carried by the crossbar 11 and by adjustment lower guides 19, which can be preferably integral with the base 9 and extending in the same direction of the base 9, i.e. parallel to the axis X. In this way it is possible to adapt the distance between all centers 13 and the respective tailstocks 15 to the length of the workpieces P.

The base 9 has two side walls 9.1 and 9.2 (see Fig.2) and an upper wall 9.3. To any side wall, or to both side walls, guides are fastened for translating a carriage supporting the spindles and the respective tools. In the illustrated embodiment, guides 21 are applied to the side wall 9.2 that extend according to a first translation direction embodied by the above-mentioned horizontal first translation axis X. The letter I indicates the center-to-center distance between the guides 21. The center-to-center distance is advantageously the maximum allowed by the height of the base 9, for the reasons explained below.

To the guides 21 a first carriage 23 is fastened, that, in the illustrated embodiment, is formed by an upright movable with respect to the base 9. The first carriage 23 is movable along the guides 21 according to the horizontal first translation axis X. The movement of the first carriage 23 along the axis X is a numerically controlled movement.

The first carriage 23 extends vertically beyond the maximum height of the base 9. The first carriage 23 supports a second carriage 25 movable along a second translation axis indicated by the double arrow Y. The second translation axis Y is horizontal and orthogonal to the first translation axis X. To allow the movement along the second translation axis Y, the second carriage 25 is provided with second guides 27 that, in the embodiment of Figs. 1 to 4, engage shoes 29 integral to the first carriage 23.

The spindles 31, to which the tools U can be applied, are carried by the second carriage 25. In the embodiment of Figs. 1 to 4, the number of spindles 31 and the number of tools U is equal to the number of pairs of centers 13 and tailstocks 15. In the illustrated example, four pairs of centers and tailstocks 13, 15 and four spindles 31 are provided. The spindles 31 can be simultaneously driven into rotation by motors, whose number can be the same as, or different from, the number of spindles 31. In the illustrated example, two motors 33 are provided, each of which rotates two spindles 31.

Thanks to the movements along the translation axes X and Y described above, the tools U can perform numerically controlled movements along the axis X to machine each point of the workpieces P held between the centers 13 and the tailstocks 15. The numerically controlled movement along the translation axis Y allows moving the tools U towards, and away from, the side surface to be machined of the workpieces P held between the centers 13 and the tailstocks 15.

As mentioned above, during machining, i.e. when the tools U are touching the workpieces P, the tools U rotate around axes parallel to the axes A, around which the workpieces P rotate.

The structure described above is particularly stiff and is adapted to withstand high inertia loads, so that the movements along the axes X and Y can be performed at very high speed. In particular, the use of a first carriage 23 formed by a movable upright guided along the guides 21, whose center-to-center distance I is long, allows avoiding deformations resulting from the inertial forces generated by the highly accelerated movements along the axis Y. The same stiffness can be achieved as regards the inertial forces according to the axis X. This allows the lathe 1 to machine the workpieces P at high speed, thanks to the opportunity of performing very significant accelerations in the directions X and Y without deformations resulting in machining errors or inaccuracies.

According to advantageous embodiments, in order that the numerically controlled multi-spindle lathe 1 works smoothly and efficiently, a protective wall 41 is provided, preferably a flexible wall, for example a bellows-like wall. The wall 41 is subdivided into two portions 41A and 41B, directly or indirectly fastened to the first carriage 23, so that the two wall portions 41A, 41B define a vertical slot for the passage of the second carriage 25 and especially of the tools U, and for the movement of the tools U towards, and away from, the workpieces. The two wall portions 41A, 41B may have, for example, a bellows-like structure. Alternatively, flexible walls can be used, winding and unwinding around rolls with vertical axis, or even walls formed by a plurality of sectors, sliding with respect to one another, so as to lengthen and shorten telescopically.

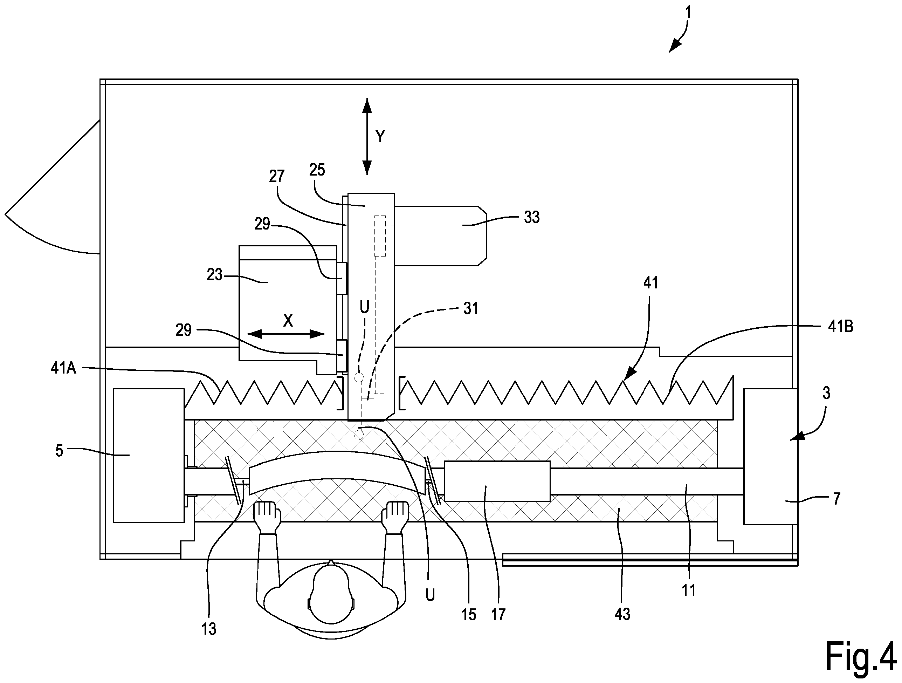

The flexible wall 41 separates the working area of the tools U from the area where the first carriage 23 moves. In this way it is possible, at least partially, to prevent chips from falling to the guides 21 and, partly, the guides 27. The chips remain in the front area of the flexible wall 41 and are collected on a conveyor 43 (schematically indicated in Fig.4), supported by the base 9 and preferably movable with a discharge movement parallel to the first translation axis X. As shown in Fig.4, the conveyor 43 may be housed in a cavity 9.4 (Fig.2) provided on the upper side 9.3 of the base 9.

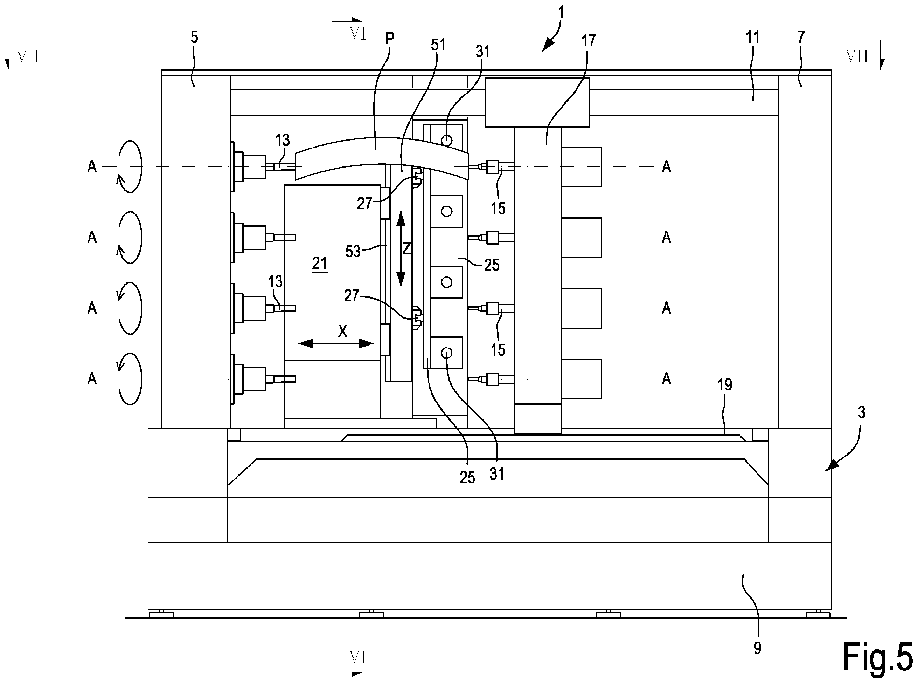

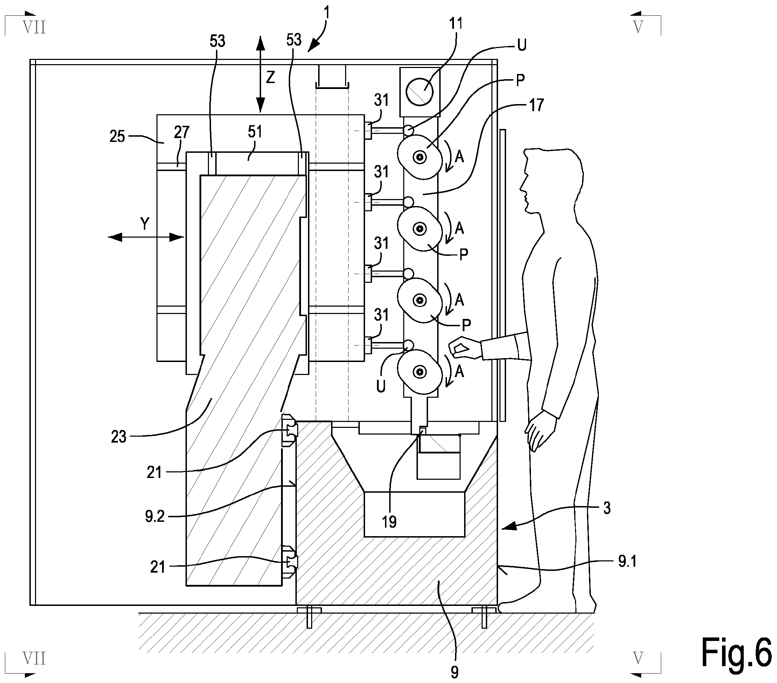

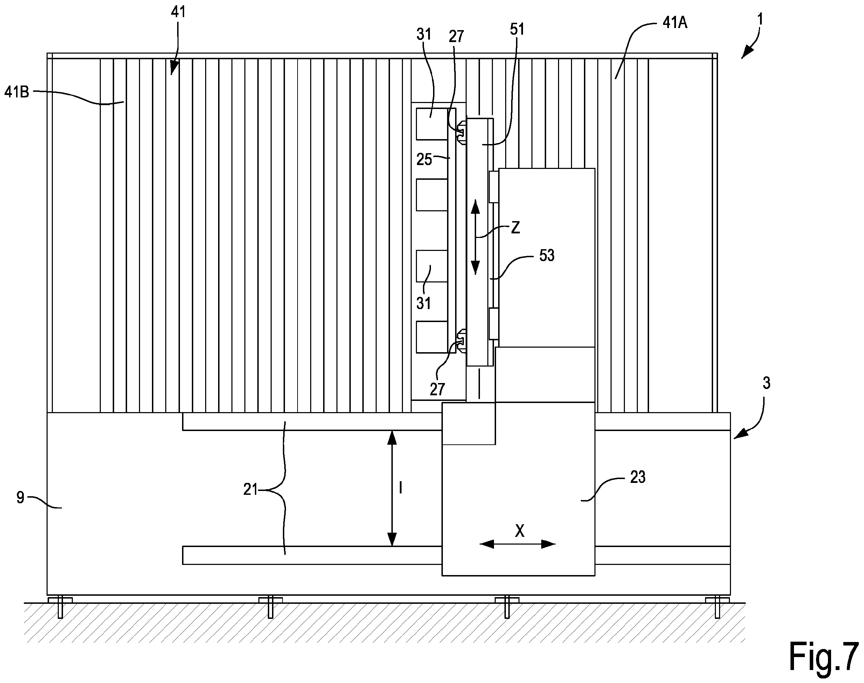

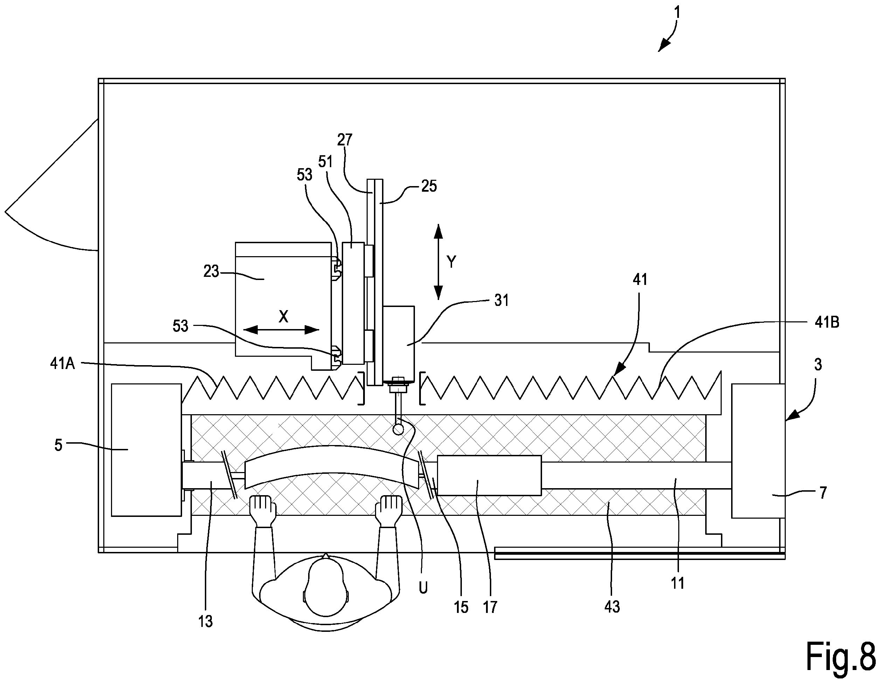

Figs. 5 to 8 show an example of a numerically controlled multi-spindle lathe. The lathe 1 of Figs. 5 to 8 has a structure mostly equal to that of the lathe 1 of Figs. 1 to 4. Equal or equivalent parts in the two embodiments are indicated with the same reference numbers and will not be described again.

The main difference between the embodiment of Figs. 1 to 4 and the embodiment of Figs. 5 to 8 is the presence of a third carriage 51, movable according to a third translation axis Z, orthogonal to the first translation axis X and to the second translation axis Y, i.e. a vertical axis. More exactly, the third carriage 51 is interposed between the first carriage 23 and the second carriage 25. The second carriage 25, instead of being directly fastened, through the guides 27, to the first carriage 23, is fastened through the guides 27 to the third carriage 51. This latter is in turn fastened, through guides 53, to the first carriage 21, so as to move with a numerically controlled movement along the vertical third translation axis Z.

In this way, the spindles 31 and the tools U can move according to three numerically controlled translation axes X, Y, Z, orthogonal to one another.

Furthermore, in the embodiment of Figs. 5 to 8 the tools U and the spindles 31 have rotation axes parallel to the axis Y and orthogonal to the axes X and Z and orthogonal to the rotation axes A of the centers 13 and tailstocks 15 and of the workpieces P. The movement along Z allows the tools U to be arranged at different height with respect to the workpieces P.

## Claims

1. A numerically controlled multi-spindle lathe (1) comprising:
a bearing structure (3) with a base (9) extending according to a first translation axis (X);
a plurality of pairs of turning members (13, 15) for rotating workpieces (P), each pair comprising a center (13) and a tailstock (15) that are coaxial with each other and define a respective rotation axis (A) of the workpieces (P); wherein each center (13) is motorized; and wherein the distance between the centers and the tailstocks is adjustable;
a first carriage (23) guided on first guides (21) integral with the base (9) and extending in the direction of the first translation axis (X); wherein the first carriage (23) is provided with a numerically controlled movement along the first translation axis (X);
a second carriage (25), supported by the first carriage (23) and movable with a numerically controlled movement with respect to the first carriage (23), on second guides (27), in the direction of a second translation axis (Y), orthogonal to the first translation axis (X); and
a plurality of spindles (31) with parallel axes, carried by the second carriage (25) and adapted to rotate tools (U) configured to work simultaneously workpieces mounted between the centers (13) and the tailstocks (15);
wherein the first translation axis (X) and the second translation axis (Y) are horizontal, and wherein the centers (13) and the tailstocks (15) define a plurality of rotation axes (A) for the workpieces (P) lying on a vertical plane parallel to the first translation axis (X) and orthogonal to the second translation axis (Y); and
**characterized in that** the spindles (31), the centers (13) and tailstocks (15) are so configured and arranged that the workpieces (P) are machined with the rotation axes of the tools (U) and of the spindles (31) parallel to the rotation axes (A) of the centers (13) and of the tailstocks (15).

2. The lathe (1) of claim 1, wherein the second carriage (25) is directly supported by the first carriage (23).

3. The lathe (1) of claim 1, wherein the base (9) comprises a conveyor (43) for collecting the chips that are formed while machining the workpieces (P), which is arranged on an upper wall (9.3) of the base (9) and is preferably housed in a cavity (9.4) provided on the upper wall (9.3) of the base (9).

4. The lathe (1) of claim 1 or 2, wherein the centers (13) are provided with motorization members controlling the synchronous rotation of the centers in concordant or discordant directions.

5. The lathe (1) of one of the previous claims, wherein the second guides (27) are integral with the second carriage (25) and preferably comprise a pair of guides that are spaced from each other in a direction orthogonal to the first translation axis (X) and to the second translation axis (Y).

6. The lathe (1) of claim 5, wherein the second guides (27) engage in shoes (29) integral to the first carriage (23).

7. The lathe (1) of one of the previous claims, wherein the first carriage (23) forms a movable upright adjacent to a first side wall (9.2) of the base (9) and movable along said wall.

8. The lathe (1) of claim 7, wherein the first guides (21) comprise a pair of guides applied to the first side wall (9.2), whose center-to-center distance is equal to at least 50% of the height of the base (9), and preferably to at least 70% of the height of the base (9).

9. The lathe (1) of claim 7, wherein the center-to-center distance (I) between the pair of first guides (21) is greater than 300 mm, preferably greater than 400 mm and, more preferably, is comprised between 450 mm and 550 mm.

10. The lathe (1) of one of the previous claims, wherein the tailstocks (15) are supported by an upright (17) that is movable parallel to the first translation axis (X) to adjust the distance between the centers (13) and the tailstocks (15), and wherein the centers (13) are supported by an upright (5) that is fixed with respect to the base (9), or vice versa; and wherein motors for rotating the centers (13) are preferably supported by the fixed upright (5).

11. The lathe (1) of claim 10, wherein the movable upright (17) supporting the tailstocks (15) or the centers (13) is guided on lower guides (19) preferably integral with the base (9) and parallel to the first guides (21) along which the first carriage (23) moves, and can be further guided on upper guides (11) carried by the bearing structure (3) above the base (9).

12. The lathe (1) of one of the previous claims, comprising a protective wall (41), preferably flexible and preferably having a bellows-like structure, approximately parallel to the first translation axis (X) and approximately orthogonal to the second translation axis (Y), which separates a machining area, where the centers (13) and the tailstocks (15) are arranged, from a protected back area, where the first carriage (23) is arranged; wherein preferably the second carriage (25) extends through the flexible wall (41).

13. The lathe (1) of claim 12, wherein the protective wall (41) comprises a first wall portion (41A) and a second wall portion (41B), between which a passage for the tools (U) is formed, the first wall portion (41A) and the second wall portion (41B) being fastened to the first carriage (23) to allow lengthening and shortening of one of said first wall portion and second wall portion and contemporaneously shortening and lengthening the other of said first wall portion and second wall portion, when the first carriage (23) translates along the first translation axis (X).

## Patentansprüche

1. Numerisch gesteuerte Mehrfachspindel-Drehmaschine (1) mit:
einer Lagerstruktur (3) mit einer Basis (9), die sich entsprechend einer ersten Translationsachse (X) erstreckt,
einer Anzahl von Paaren von Drehelementen (13, 15) zum Drehen von Werkstücken (P), wobei jedes Paar ein Zentrum (13) und einen Reitstock (15) aufweist, die zueinander koaxial sind und eine jeweilige Drehachse (A) des Werkstücks (P) definieren, wobei jedes Zentrum (13) angetrieben ist und wobei der Abstand zwischen den Zentren und dem Reitstock einstellbar ist,
einem ersten Schlitten (23), der auf ersten Führungen (21), die integral mit der Basis (9) sind, geführt ist und sich in der Richtung der ersten Translationsachse (X) erstreckt,
wobei der erste Schlitten (23) mit einer numerisch gesteuerten Bewegung entlang der ersten Translationsachse (X) versehen ist,
einem zweiten Schlitten (25), der durch den ersten Schlitten (23) getragen wird und mit einer numerisch gesteuerten Bewegung mit Bezug auf den ersten Schlitten (23) auf zweiten Führungen (27) in Richtung einer zweiten Translationsachse (Y), die orthogonal zu der ersten Translationsachse (X) ist, bewegbar ist, und
einer Anzahl von Spindeln (3) mit parallelen Achsen, die von dem zweiten Schlitten (25) getragen werden und ausgebildet sind, um Werkzeuge (U) zu drehen, die ausgebildet sind, um gleichzeitig Werkstücke zu bearbeiten, die zwischen den Zentren (13) und dem Reitstock (15) montiert sind,
wobei die erste Translationsachse (X) und die zweite Translationsachse (Y) horizontal sind und wobei die Zentren (13) und der Reitstock (15) eine Anzahl von Drehachsen (H) für das Werkstück (P) definieren, die auf einer vertikalen Ebene parallel zu der ersten Translationsachse (X) und orthogonal zu der zweiten Translationsachse (Y) liegen, und **dadurch gekennzeichnet, dass** die Spindeln (31, die Zentren (13 und die Reitstöcke (15) so ausgebildet und angeordnet sind, dass die Werkstücke (P) mit den Drehachsen der Werkzeuge (U) und der Spindeln (31) parallel zu den Drehachsen (A) der Zentren (13) und des Reitstücks (15) bearbeitet werden.

2. Drehmaschine (1) nach Anspruch 1, wobei der zweite Schlitten (25) direkt durch den ersten Schlitten (23) getragen wird.

3. Drehmaschine (1) nach Anspruch 1, wobei die Basis (9) einen Förderer (43) aufweist, um Späne zu sammeln, die gebildet werden, während das Werkstück (P) bearbeitet wird der auf einer oberen Wand (9.3) der Basis (9) angeordnet ist und der vorzugsweise in einem Hohlraum (9.4) aufgenommen ist, der an der oberen Wand (9.3) der Basis (9) vorgesehen ist.

4. Drehmaschine (1) nach Anspruch 1 oder 2, wobei die Zentren (13) mit angetriebenen Elementen versehen sind, die die synchrone Drehung der Zentren in gleichlaufenden oder gegenläufigen Richtungen steuern.

5. Drehmaschine (1) nach einem der vorstehenden Ansprüche, wobei die zweiten Führungen integral mit dem zweiten Schlitten (25) sind und vorzugsweise ein Paar von Führungen aufweisen, die voneinander in einer Richtung orthogonal zu der ersten Translationsachse (X) und der zweiten Translationsachse (Y) beabstandet sind.

6. Drehmaschine (1) nach Anspruch 5, wobei die zweiten Führungen (27 in Schuhen (29) eingreifen, die integral mit dem ersten Schlitten (23) sind.

7. Drehmaschine (1) nach einem der vorstehenden Ansprüche, wobei der erste Schlitten (23) einen bewegbaren Ständer bildet, der angrenzend an eine erste Seitenwand (9.2) der Basis (9) ist und entlang der Wand bewegbar ist.

8. Drehmaschine (1) nach Anspruch 7, wobei die ersten Führungen (21) ein Paar von Führungen aufweisen, die an der ersten Seitenwand (9.2) angebracht sind, wobei deren Zentrum-Zentrum-Abstand gleich oder mindestens 50 % der Höhe der Basis (9) und vorzugsweise mindestens 70 % der Höhe der Basis (9) beträgt.

9. Drehmaschine (1) nach Anspruch 7, wobei der Zentrum-Zentrum-Abstand (1) zwischen dem Paar der ersten Führungen (21) größer ist als 300 mm, vorzugsweise größer als 400 mm und insbesondere vorzuziehen zwischen 450 und 550 mm.

10. Drehmaschine (1) nach einem der vorstehenden Ansprüche, wobei die Reitstöcke(15) durch einen Ständer (17) getragen werden, der parallel zu der ersten Translationsachse (X) bewegbar ist, um den Abstand zwischen den Zentren (13) und den Reitstöcken einzustellen, und wobei die Zentren (13) durch einen Ständer (5) getragen werden, der mit Bezug auf die Basis (9) oder umgekehrt fixiert ist, wobei Motoren zum Drehen der Zentren (13) vorzugsweise durch den fixierten Ständer (5) getragen werden.

11. Drehmaschine (1) nach Anspruch 10, wobei der bewegbare Ständer (17), der die Reitstöcke (15) oder die Zentren (13) trägt, auf unteren Führungen (19) geführt wird, die vorzugsweise integral mit der Basis (9) und parallel zu den ersten Führungen (21) sind, entlang derer sich der erste Schlitten (23 bewegt, und ferner an oberen Führungen (11) geführt werden kann, die durch die Lagerstruktur (3) oberhalb der Basis (9) getragen werden.

12. Drehmaschine (1) nach einem der vorstehenden Ansprüche mit einer Schutzwand (41), die vorzugsweise flexibel und vorzugsweise eine Glockenstruktur etwa parallel zu der ersten Translationsachse (X) aufweist und etwa orthogonal zu der zweiten Translationsachse (Y) ist, die einen Bearbeitungsbereich abtrennt, in dem die Zentren (13) und die Reizstöcke von einem geschützten Rückbereich angeordnet sind, wobei der erste Schlitten (23) angeordnet ist, wobei vorzugsweise der zweite Schlitten sich durch die flexible Wand (41) erstreckt.

13. Drehmaschine (1) nach Anspruch 12, wobei die Schutzwand (41) einen ersten Wandteil (41 A) und einem zweiten Wandteil (41 B) aufweist, zwischen denen ein Durchlass für das Werkzeug (U) gebildet ist, wobei der erste Wandteil (41 A und der zweiten Wandteil (41 B) an dem ersten Schlitten (43) befestigt ist, um eine Verlängerung und eine Verkürzung von einem des ersten Wandteils und des zweiten Wandteils zu ermöglichen und entsprechend eine Verkürzung oder eine Verlängerung des ersten Wandteils und des zweiten Wandteils zu ermöglichen, wenn der erste Schlitten (23) sich entlang der ersten Translationsachse (X) bewegt.

## Revendications

1. Un tour multibroche à commande numérique (1) comprenant :
une structure de support (3) avec une base (9) s'étendant suivant un premier axe de translation (X) ;
une pluralité de paires d'organes tournants (13, 15) pour faire tournes des pièces à usiner (P), chaque paire comprenant un centre (13) et une contre-pointe (15) qui sont coaxiaux l'un avec l'autre et formant un axe de rotation respectif (A) des pièces à usiner (P) ; dans lequel chaque centre (13) est motorisé ; et dans lequel la distance entre les centres et les contre-pointes est réglable ;
un premier chariot (23) guidé sur des premiers guides (21) solidaires de la base (9) et s'étendant dans la direction du premier axe de translation (X) ; dans lequel le premier chariot (23) est animé d'un mouvement commandé numériquement le long du premier axe de translation (X) ;
un deuxième chariot (25), supporté par le premier chariot (23) et déplaçable suivant un mouvement commandé numériquement par rapport au premier chariot (23), sur des deuxièmes guides (27), dans la direction d'un deuxième axe de translation (Y), perpendiculaire au premier axe de translation (X) ; et
une pluralité de broches (31) avec des axes parallèles, portées par le deuxième chariot (25) et aptes à faire tourner des outils (U) configurés pour usiner simultanément des pièces à usiner montées entre les centres (13) et les contre-pointes (15) ;
le premier axe de translation (X) et le deuxième axe de translation (Y) étant horizontaux et les centres (13) et les contre-pointes (15) formant une pluralité d'axes de rotation (A) pour les pièces à usiner (P) se situant sur un plan vertical parallèle au premier au premier axe de translation (X) et perpendiculaire au deuxième axe de translation (Y) ; et
**caractérisé en ce que** les broches (31), les centres (13) et les contre-pointes (15) sont configurées de telle sorte et agencées de telle sorte que les pièces à usiner (P) sont usinées avec les axes de rotation des outils (U) et des broches (31) parallèles aux axes de rotation (A) des centres (13) et des contre-pointes (15).

2. Le tour (1) selon la revendication 1, dans lequel le deuxième chariot (25) est supporté directement par le premier chariot (23).

3. Le tour (1) selon la revendication 1, dans lequel la base (9) comprend un convoyeur (43) pour collecter les copeaux qui sont formés lors de l'usinage des pièces à usiner (P), lequel est agencé sur une paroi supérieure (9.3) de la base (9) et est de préférence logé dans une cavité (9.4) prévue sur la paroi supérieure (9.3) de la base (9).

4. Le tour (1) selon la revendication 1 ou 2, dans lequel les centres (13) sont prévus avec des organes de motorisation commandant la rotation synchronisée des centres dans des sens identiques ou opposés.

5. Le tour (1) selon l'une des revendications précédentes, dans lequel les deuxièmes guides (27) sont solidaires du deuxième chariot (25) et comprennent de préférence une paire de guides qui sont espacés l'un de l'autre dans une direction perpendiculaire au premier axe de translation (X) et au deuxième axe de translation (Y).

6. Le tour (1) selon la revendication 5, dans lequel les deuxièmes guides (27) viennent en prise avec des sabots (29) solidaires du premier chariot (23).

7. Le tour (1) selon l'une des revendications précédentes, dans lequel le premier chariot (23) forme un montant mobile adjacent à la première paroi latérale (9.2) de la base (9) et mobile le long de ladite paroi.

8. Le tour (1) selon la revendication 7, dans lequel les premiers guides (21) comprennent une paire de guides appliqués à la première paroi latérale (9.2), dont la distance centre-à-centre est égale à au moins 50% de la hauteur de la base (9), et de préférence à au moins 70% de la hauteur de la base (9).

9. La tour (1) selon la revendication 7, dans lequel la distance centre-à-centre (I) entre la paire de premiers guides (21) est supérieure à 300 mm, de préférence supérieure à 400 mm et, plus préférentiellement, comprise entre 450 mm et 550 mm.

10. Le tour (1) selon l'une des revendications précédentes, dans lequel les contre-pointes (15) sont supportées par un montant (17) qui est mobile parallèlement au premier axe de translation (X) pour régler la distance entre les centres (13) et les contre-pointes (15) et dans lequel les centres (13) sont montés sur un montant (5) qui est fixe par rapport à la base (9), ou vice-versa ; et dans lequel des moteurs pour faire tourner les centres (13) sont de préférence supportés par le montant fixe (5).

11. Le tour (1) selon la revendication 10, dans lequel le montant mobile (17) supportant les contre-pointes (15) ou les centres (13) est guidé sur des guides inférieurs (19) de préférence solidaires de la base (9) et parallèles aux premiers guides (21) le long desquels le premier chariot (23) se déplace, et peut encore être guidé sur des guides supérieurs (11) portés par la structure de support (3) au-dessus de la base (9).

12. Le tour (1) selon l'une des revendications précédentes, comprenant une paroi de protection (41), de préférence flexible et de ayant de préférence une structure en soufflet, approximativement parallèle au premier axe de translation (X) et approximativement perpendiculaire au deuxième axe de translation (Y), qui sépare une zone d'usinage, dans laquelle les centres (13) et les contre-pointes (15) sont agencés, d'une zone arrière protégée où le premier chariot (23) est agencé ; le deuxième chariot (25) s'étendant de préférence à travers la paroi flexible (41).

13. Le tour (1) selon la revendication 12, dans lequel la paroi de protection (41) comprend une première partie de paroi (41A) et une deuxième partie de paroi (41B), entre lesquelles un passage pour les outils (U) est formé, la première partie de paroi (41A) et la deuxième partie de paroi (41B) étant fixées au premier chariot (23) pour permettre un allongement et un raccourcissement de l'une desdites première partie de paroi et deuxième partie de paroi et simultanément un raccourcissement et un allongement de l'autre desdites première partie de paroi et deuxième partie de paroi, lorsque le premier chariot (23) se déplace le long du premier axe de translation (X).
